# EUROPÄISCHE PATENTANMELDUNG

(11) **EP 1 361 764 A1**
(43) Veröffentlichungstag der Anmeldung: **12.11.2003**
(21) Anmeldenummer: 03007505.5
(22) Anmeldetag: 01.04.2003
(51) Int. Cl.: H04Q 7/22, H04M 3/493, G06F 17/30

(54) **Verfahren zum automatischen Verarbeiten von SMS-Nachrichten und Dialogsystem zur Kommunikation mittels SMS-Nachrichten**

(30) Priorität: 10.05.2002 DE 10221059
(71) Anmelder: Media Impuls GmbH, 44229 Dortmund (DE)
(72) Erfinder: Stratemann, Henrik, 44139 Dortmund (DE); Petry, Klaus, 44319 Dortmund (DE)
(74) Vertreter: Hoffmeister, Helmut, Dr.

(57) **Zusammenfassung**

Zum automatischen Verarbeiten von SMS-Nachrichten mit Hilfe einer Servereinrichtung, die mit einem Mobilfunknetz (3) Informationen austauschen kann, werden SMS-Nachrichten einer Mobilfunkeinrichtung (2) eines Nutzers, die einen in natürlicher menschlicher Sprache abgefassten Nachrichtentext enthalten, über ein Funkmodem (210,220) mit zugeordneter Mobilfunkteilnehmernummer empfangen und in ein Datentelegramm (250) umgewandelt.

Das Datentelegramm (250) wird an eine dem Funkmodem (210,220) zugeordnete Antwortgeneratoreinrichtung (410,420) übermittelt, in welcher in Abhängigkeit von in dem Nachrichtentext enthaltenen Schlüsselwörtern und/oder nach semantischen Regeln ein vorgefertigter Antworttext in natürlicher Sprache generiert wird und/oder ein computerlesbarer Code ausgewählt wird.

Ohne einen Empfang einer SMS-Nachricht wird nach Ablauf einer Wartezeit ein Antworttext aus einer Antwortspeichereinrichtung (600) abgerufen und an den Nutzer übermittelt.

## Beschreibung

Die Erfindung betrifft ein Verfahren zum automatischen Verarbeiten von SMS-Nachrichten mit Hilfe einer Servereinrichtung, die mit einem Mobilfunknetz Informationen austauschen kann, mit folgenden Verfahrensschritten:
a) elektronisches Erfassen einer von einer Mobilfunkeinrichtung über das Mobilfunknetz gesendeten SMS-Nachricht mit Hilfe der Servereinrichtung,
b) elektronisches Ermitteln eines Inhalts der SMS-Nachricht,
c) Erfassen einer der Mobilfunkeinrichtung zugeordneten Mobilfunkteilnehmernummer als Identifikation eines Nutzers und Speichern in einer Teilnehmerdatenbankeinrichtung,
d) automatisches Erzeugen einer SMS-Antwortnachricht in Abhängigkeit von dem ermittelten Inhalt der SMS-Nachricht,
e) Speichern einer Information über die SMS-Antwortnachricht in der Teilnehmerdatenbankeinrichtung, wobei die Information der Identifikation des Nutzers elektronisch zugeordnet ist;
f) Übermitteln der SMS-Antwortnachricht an die Mobilfunkeinrichtung.

Aus der US-PS 5 895 466 ist ein Kundendienstsystem und ein Verfahren zum Betreiben des Kundendienstsystems bekannt, das unter Nutzung einer Einrichtung zur Verarbeitung natürlicher Sprache einen maschinell geführten Sprachdialog ermöglicht, der weitgehend einer menschlichen Kommunikationsweise angenähert ist. Eine solche Antwortgeneratoreinrichtung zur Erkennung und Interpretation natürlicher Sprache, die menschliche Dialoge simuliert, wird auch als BOT bezeichnet. Ein BOT kann ein begrenztes Repertoire von Fragen verarbeiten und hat dafür eine große Anzahl von fertig formulierten Antworten in einer Speichereinrichtung hinterlegt. Dabei sucht das System nach Schlüsselwörtern und Satzmustern in der Anfrage des Nutzers, um dann aus einer Datenbank eine passende Antwort auszuwählen. Sollte keine brauchbare Antwort vorhanden sein, kann der BOT geschickt vom Thema ab- und auf ein anderes hinlenken, was einer menschlichen Kommunikationsstrategie entspricht. Überdies ist ein BOT lernfähig im Sinne einer fortwährenden Erweiterung seines Sprachumfangs. Jedem BOT kann eine eigene mehr oder weniger ausgeprägte Persönlichkeit zugeordnet werden. Die Emotionen, ob freundlich, verärgert oder nachdenklich, sind an die Antworten gekoppelt und werden vom Autor des BOT ausgewählt. So kann beim Nutzer der Eindruck entstehen, der BOT reagiere emotional oder quasi menschlich auf seine Eingaben.

Das bekannte System setzt jedoch eine Anfrage über ein Computernetzwerk voraus. Offenbart ist auch nur eine Nutzung eines BOTs für standardisierte Auskünfte an den Kunden eines Handelsunternehmens, beispielsweise Auskünfte über Lieferzeiten von Produkten oder Bestellmodalitäten. Eine Nutzung zu Unterhaltungszwecken und/oder mittels Mobilfunkeinrichtungen ist dort nicht offenbart.

Aus der DE 100 34 700 A1 ist ein Verfahren zum automatischen Verarbeiten von SMS-Nachrichten mit Hilfe einer Servereinrichtung, die mit einem Mobilfunknetz Informationen austauschen kann, bekannt. Des weiteren ist eine Vorrichtung zur Verwendung bei dem Verfahren offenbart. Im Rahmen des Verfahrens wird zunächst eine von einer Mobilfunkeinrichtung über das Mobilfunknetz gesendete SMS-Nachricht mit Hilfe der Servereinrichtung elektronisch erfasst. Danach wird ein Inhalt der SMS-Nachricht elektronisch ermittelt und in Abhängigkeit von dem ermittelten Inhalt eine SMS-Antwortnachricht automatisch erzeugt. Die SMS-Antwortnachricht umfasst einen alphanumerischen Code und wird anschließend an die Mobilfunkeinrichtung zum Darstellen des alphanumerischen Codes auf einer Anzeigeeinrichtung der Mobilfunkeinrichtung übermittelt. Mit Hilfe der Servereinrichtung wird weiterhin eine der Mobilfunkeinrichtung zugeordnete elektronische Identifikation erfasst. In der Servereinrichtung wird eine Information über die SMS-Antwortnachricht so gespeichert, dass die Information der Identifikation elektronisch zugeordnet ist. Hierbei soll der Nutzer jedoch eine vorformulierte Anfrage, die ihm beispielsweise über Printmedien vorgegeben wurde, mittels SMS-Nachricht an das System richten. Die Auswertung der SMS-Nachricht des Nutzers beschränkt sich daher auf einen Vergleich mit den vorformulierten Nutzeranfragen. Der Nutzer kann insbesondere keine frei formulierte Anfrage an das bekannte System richten.

Aus der DE 201 02 259 U1 ist ein Mobil-Kommunikationssystem zum automatischen Verarbeiten von SMS-Nachrichten mit Hilfe einer Servereinrichtung, die mit einem Mobilfunknetz Informationen austauschen kann, bekannt. Über das Mobilfunknetz gesendete SMS-Nachrichten werden mit Hilfe der Servereinrichtung elektronisch erfasst. Die einer Mobilfunkeinrichtung zugeordnete Mobilfunkteilnehmernummer wird im Mobilfunknetz als Identifikation eines Nutzers erfasst und ist in einer Teilnehmerdatenbankeinrichtung gespeichert. SMS-Antwortnachrichten können jedoch mit dem bekannten Kommunikationssystem nicht automatisch erzeugt werden.

Aufgabe der Erfindung ist es, ein Verfahren zum automatischen Verarbeiten von SMS-Nachrichten anzugeben, bei dem der Mobilfunkteilnehmer mit dem System einen Dialog in natürlicher Sprache führen kann, und insbesondere einen Dialog zu Unterhaltungszwecken führen kann.

Diese Aufgabe wird bei einem Verfahren der eingangs genannten Art dadurch gelöst,
- dass solche SMS-Nachrichten verarbeitet werden, die einen in natürlicher menschlicher Sprache abgefassten Nachrichtentext enthalten; und
- dass die SMS-Nachrichten des Nutzers über ein Funkmodem, welchem jeweils eine Mobilfunkteilnehmernummer zugeordnet ist, empfangen werden und in ein Datentelegramm umgewandelt werden, welches wenigstens die Mobilfunkteilnehmernummer des Nutzers und einen Nachrichtentext der SMS-Nachricht umfasst;
- dass das Datentelegramm an einen dem Funkmodem zugeordneten Antwortgenerator übermittelt wird, in welchem in Abhängigkeit von in dem Nachrichtentext enthaltenen Schlüsselwörtern ein vorgefertigter Antworttext in natürlicher Sprache und/oder ein Antworttext nach semantischen Regeln generiert wird und/oder ein computerlesbarer Code ausgewählt wird
   und/oder
- dass ohne einen Empfang einer SMS-Nachricht nach Ablauf einer Wartezeit ein Antworttext aus einer Antwortspeichereinrichtung abgerufen und an den Nutzer übermittelt wird.

Mit Antworttext ist eine an den Nutzer des Systems gerichtete Nachricht bezeichnet, auch wenn diese Nachricht ohne eine vorausgegangene Frage des Nutzers generiert und abgesandt wird oder wenn andere Daten als Textdaten an den Nutzer übermittelt werden.

Die mit der Erfindung erzielten Vorteile bestehen insbesondere darin, dass der Nutzer in natürlicher Weise seine Angaben an das System richten kann und so das Gefühl bekommt, er würde mit einer natürlichen Person kommunizieren. Es ist insbesondere nicht notwendig, bestimmte Worte und/oder Satzmuster auswendig zu lernen, um mit dem System in einen Dialog zu treten.

Außerdem erhält der Nutzer eine Antwort, die in natürlicher Sprache, also beispielsweise in grammatikalisch korrekten Sätzen, formuliert ist, wodurch die Antworten leichter verständlich sind, als schlagwortartig aneinander gereihte Informationsstücke.

Der Eindruck, mit einem menschlichen Gesprächspartner in Kontakt zu treten, wird noch dadurch verstärkt, dass die Nachrichten über ein Funkmodem empfangen werden, dem eine eigene Mobilfunkteilnehmernummer zugeordnet ist. Diese Teilnehmernummer entspricht in ihrem Aufbau den üblichen Nummern, die für Mobilfunktelefone vergeben werden, so dass anhand der Empfängeradresse, an die der Nutzer eine SMS-Nachricht sandte, nicht erkennbar ist, dass es sich bei dem Empfänger nicht um einen menschlichen Mobilfunkteilnehmer, sondern um eine technische Vorrichtung handelt.

Erfindungswesentlich ist auch, dass ohne einen Empfang einer SMS-Nachricht vom Nutzer vorgesehen ist, eine SMS-Antwortnachricht zu generieren, deren Antworttext aus einer Antwortspeichereinrichtung abgerufen wird. Der Nutzer muss also nicht jeweils selbst tätig werden, um eine Aktion der Servereinrichtung auszulösen. Er bekommt so ebenfalls das Gefühl, dass ein menschlicher Kommunikationspartner ihn bei seiner Verteilung von Informationen berücksichtigt und von sich aus den Dialog zu ihm aufnimmt.

In einer vorteilhaften Ausgestaltung ist vorgesehen, dass der Nutzer zunächst an einer Buchungseinrichtung anruft. Dieser Anruf kann von der Mobilfunkeinrichtung aus erfolgen, er kann jedoch auch von einem beliebigen anderen Telefon aus erfolgen; auch andere Kommunikationsmittel, insbesondere Email, sind möglich. Die Verbindung zu der Buchungseinrichtung erfolgt vorzugsweise über einen kostenpflichtigen Anschluss, so dass in Abhängigkeit von der Anrufdauer des Nutzers an der Buchungseinrichtung ein bestimmter Gebührenbetrag für den Betreiber der Servereinrichtung gutgeschrieben wird. Der Betreiber der Servereinrichtung kann somit über die Dauer des ersten Gesprächs mit den Nutzer bei der Buchungseinrichtung festlegen, wie hoch die Gebühren für die weitere Nutzung der Servereinrichtung sein sollen.

Mit dem Anruf des Nutzers an der Buchungseinrichtung werden verschiedene Informationen abgefragt. So kann der Nutzer angeben,
- mit welcher virtuellen Person, hinter der sich ein bestimmter Antwortgenerator verbirgt, er zukünftig kommunizieren möchte,
- was für einen Typ von Mobilfunktelefon er einsetzen wird und
- über welchen Mobilfunkdienstbetreiber er den Dialog mit der virtuellen Person, also mit der Servereinrichtung, betreiben möchte.

All diese Informationen können über ein Spracherkennungssystem vom Nutzer abgefragt werden.

Nach dem Ende des Anrufs des Nutzers an der Buchungseinrichtung wird ein Teilnehmerkonto in der Teilnehmerdatenbankeinrichtung eingerichtet, das auch ein Teilnehmer-Wertkonto enthält. In dem Teilnehmer-Wertkonto wird ein Buchungswert gespeichert, der denjenigen Gebühren entspricht, die bei dem kostenpflichtigen Anruf des Nutzers bei der Buchungseinrichtung aufgelaufen sind, also insbesondere von der Dauer des Anrufs abhängen.

Anschließend an die Erhöhung des Teilnehmer-Wertkontos kann eine erste SMS-Antwortnachricht an die Mobilfunkeinrichtung des Nutzers übermittelt werden, um diesem mitzuteilen, dass die Nutzung der Servereinrichtung für ihn jetzt freigegeben ist und unter welcher Mobilfunkteilnehmernummer er Kontakt mit der virtuellen Person aufnehmen kann.

In einer vorteilhaften Ausführungsform des erfindungsgemäßen Verfahrens werden die SMS-Antwortnachrichten über eine Datenleitung an eine SMS-Sammelversandeinrichtung für Großkunden eines Mobilfunkdienstbetreibers und von dort an die Mobilfunkeinrichtung des Nutzers übermittelt. Eine solche SMS-Sammelversandeinrichtung, die auch als large account access bezeichnet wird, steht Großkunden des Mobilfunkdienstbetreibers zur Verfügung, um eine große Vielzahl von SMS-Nachrichten versenden zu können. Damit bleiben die erfindungsgemäß vorgesehenen Funkmodeme während des Versendens der SMS-Antwortnachrichten frei für den Empfang von weiteren SMS-Nachrichten.

Vorzugsweise wird bei dem Versand von SMS-Antwortnachrichten über eine SMS-Sammelversandeinrichtung die Mobilfunkteilnehmernummer des Funkmodems als Absenderadresse angegeben, so dass beim Nutzer der Eindruck entsteht, er erhalte von derselben Person, an die er selbst eine SMS-Nachricht gerichtet hatte, eine Antwort.

Neben reinen Textnachrichten, die nur alphanumerische Zeichen umfassen und die für die Anzeige auf einem Display der Mobilfunkeinrichtung des Nutzers geeignet'sind, oder an Stelle solcher Textnachrichten, kann mit der SMS-Antwortnachricht auch ein computerlesbarer Code, insbesondere ein durch ein Prozessormittel der Mobilfunkeinrichtung ausführbarer Code, versendet werden. Der computerlesbare Code kann Audiodateien, insbesondere Klingeltöne, oder Grafiken umfassen, die auf der Mobilfunkeinrichtung des Nutzers wiederzugeben sind. Somit besteht die Möglichkeit, dass der Nutzer von seinem virtuellen Gesprächspartner, der technisch durch einen der Antwortgeneratoren in der Antwortgeneratoreinrichtung gebildet ist, neben reinen Textnachrichten auch in anderer Weise angesprochen wird.

Mit der Fortentwicklung der Mobilfunktechnik hin zu einer Breitbandübertragung, beispielsweise über UMTS, ist es denkbar, auch Videosequenzen mit der Antwortnachricht an den Nutzer zu übertragen.

Die Erfindung wird nachfolgend mit Bezug auf die Zeichnung näher erläutert. Es zeigen im einzelnen:
- Fig. 1: ein Dialogsystem als schematisches Blockschaltbild;
- Fig. 2: ein innerhalb der Servereinrichtung zu verarbeitendes Datentelegramm in schematischer Darstellung.

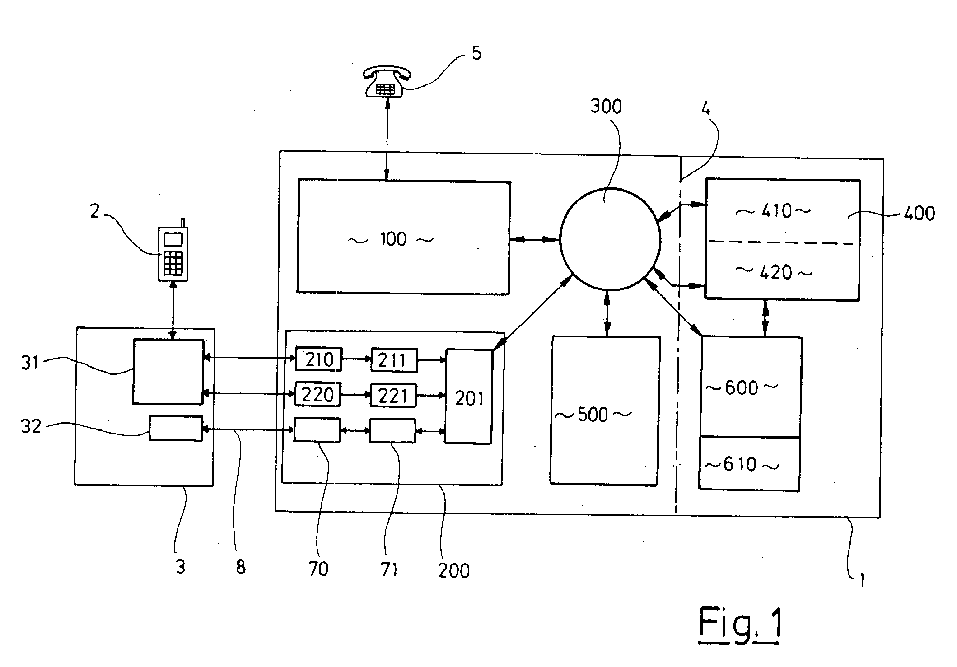

In Fig. 1 ist ein Dialogsystem zur Kommunikation mittels SMS-Nachrichten mit einem Nutzer, der eine Mobilfunkeinrichtung 2 besitzt, dargestellt. Der Nutzer kommuniziert über das Mobilfunknetz 31 des Mobilfunkdienstbetreibers 3 mit einer Servereinrichtung 1.

Der Mobilfunkdienstbetreiber 3 steht hierbei symbolisch für jeden Mobilfunkdienstbetreiber, nicht nur in Deutschland, sondern auch international. Unabhängig von der Anzahl der angeschlossenen bzw. eingesetzten Mobilfunknetze wird im Folgenden exemplarisch nur von einem Mobilfunkdienstbetreiber 3 gesprochen.

Die Servereinrichtung 1 umfasst in der dargestellten bevorzugten Ausführungsform wenigstens folgende Hauptbaugruppen, die über eine Dialogsteuerungseinrichtung 300 miteinander verbunden sind:
- eine Buchungseinrichtung 100;
- eine Sende- und Empfangseinrichtung 200 mit wenigstens:
   - einem Funkmodem 210; 220 mit jeweils wenigstens einer zugeordneten SMS-Servereinrichtung 211; 221,
   - wenigstens einer SMS-Sammelversandeinrichtung 70 mit jeweils wenigstens einer zugeordneten SMS-Servereinrichtung 71 zum Senden von SMS-Nachrichten über eine SMS-Sammelversandeinrichtung 32 eines Mobilfunkdienstbetreibers 3; und
   - einer SMS-Verteilereinrichtung 201.
- wenigstens einen jedem Funkmodem 210; 220 zugeordneten Antwortgenerator 410; 420 in einer Antwortgeneratoreinrichtung 400,
- eine Teilnehmerdatenbankeinrichtung 500.

In einer bevorzugten Ausführungsform weist die Servereinrichtung 1 außerdem eine Antwortspeichereinrichtung 600 auf, von der Antworttexte abgerufen werden können, auch wenn keine Anfrage des Nutzers vorliegt.

Die Verwendung des Dialogsystems mit einer bevorzugten Ausführungsform des erfindungsgemäßen Verfahrens wird nachfolgend erläutert:

Von einem Telefonanschluss 5, bei dem es sich um einen Festnetzanschluss oder um eine Mobilfunkeinrichtung handeln kann, wird die Buchungseinrichtung 100 angerufen. Diese enthält vorzugsweise einen Sprachspeicher zum Abruf von gesprochenen Fragen bzw. standardisierten Antworten und/oder einen Sprachgenerator zur Erzeugung von Fragen und Antworten aus einem maschinell verarbeitbaren Text. Der Anrufer wird hierbei aufgefordert, seine Mobilfunkteilnehmernummer, den Typ bzw. Hersteller seiner Mobilfunkeinrichtung und den Namen der virtuellen Person, mit der er kommunizieren möchte, anzugeben. Der Anruf bei der Buchungseinrichtung 100 kann als kostenpflichtiger Anruf gestaltet sein, wobei die Länge der Anrufdauer einem bestimmten Gebührenbetrag entspricht, die dem Inhaber des Telefonanschlusses 5 in Rechnung gestellt und dem Betreiber der Servereinrichtung 1 gutgeschrieben wird.

Möglich ist auch, hier eine andere Zahlungsweise für die Teilnahme an der Kommunikation mit der Servereinrichtung 1 vorzusehen, beispielsweise die Angabe von Kreditkartenkonten oder dergleichen. Bei dieser Art der Zahlungsweise kann die Kommunikation mit der Buchungseinrichtung 100 auch in anderer Weise als von einem Telefonanschluss aus hergestellt werden, beispielsweise durch E-Mail.

Außerdem kann vorgesehen sein, dem Nutzer ohne zusätzliche Kosten den Zugang zu einem Dialog mit der Servereinrichtung 1 zu ermöglichen. In diesem Fall dient der Dialog mit der Buchungseinrichtung 100 lediglich zur Abfrage der benötigten technischen Daten.

Nach dem Dialog mit der Buchungseinrichtung 100 wird durch die Dialogsteuerungseinrichtung 300 ein Teilnehmerkonto in der Teilnehmerdatenbankeinrichtung 500 erzeugt. In dem selben Datensatz oder in einem separaten Datensatz wird ein Teilnehmer-Wertkonto geführt, in dem eine Anzahl von Werteinheiten bei der Einrichtung des Kontos oder bei jedem späteren Dialog mit der Buchungseinrichtung eingeschrieben werden. In dem Teilnehmerkonto werden die Mobilfunkteilnehmernummer des Nutzers und die weiterhin abgefragten Daten wie der Typ der Mobilfunkeinrichtung etc. eingetragen.

Hatte sich der Nutzer bereits zuvor einmal bei der Servereinrichtung 1 angemeldet, kann er durch einen Anruf bei der Buchungseinrichtung 100 sein Teilnehmer-Wertkonto wieder erhöhen und so die Dauer seiner Nutzungsberechtigung verlängern oder aber eine neue Nutzungsperiode freischalten lassen. Die technischen Daten müssen in diesem Fall nicht mehr abgefragt werden, da sie noch in der Teilnehmerdatenbankeinrichtung 500 hinterlegt sind.

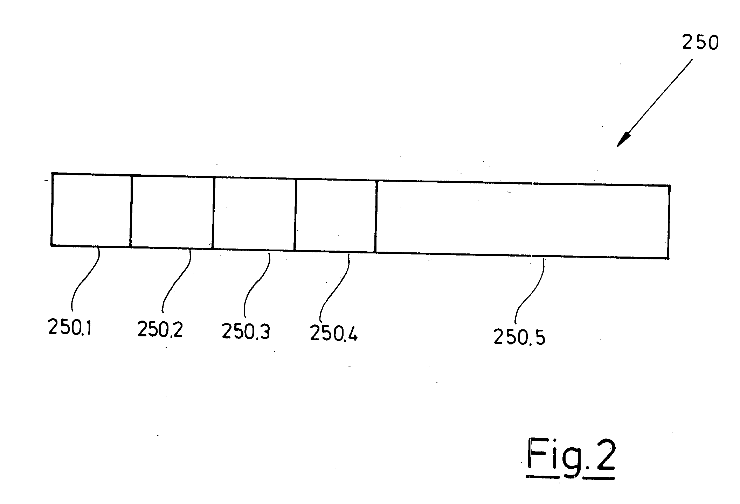

Anschließend ruft die Dialogsteuerungseinrichtung 300 aus der Antwortspeichereinrichtung 600 einen vorgefertigten Begrüßungstext ab, der die Mobilfunkteilnehmernummer eines der Funkmodems 210, 220 enthält, an die der Nutzer mit seiner Mobilfunkeinrichtung 2 über das Mobilfunknetz 3 eine SMS-Nachricht senden kann. Der Begrüßungstext wird in ein Datentelegramm 250 (vgl. Fig. 2) eingegeben, das beispielsweise
- in einem ersten Feld 250.1 die Mobilfunkteilnehmernummer des Nutzers als Index enthält,
- in einem weiteren Feld 250.2 den Typ der Mobilfunkeinrichtung 2,
- in einem Feld 59.3 den Namen bzw. die Kennung des Mobilfunkdienstbetreibers,
- in einem weiteren Feld 250.4 die Anzahl der dem Nutzer verbleibenden Werteinheiten und
- in einem Feld 250.5 den eigentlichen zu übermittelnden Text.

Das Datentelegramm 250 wird an die Sende- und Empfangseinrichtung 200 übergeben, wo es in einer SMS-Verteilereinrichtung 201 an die SMS-Servereinrichtung 71 übergeben wird, die es in eine dem jeweiligen Mobilfunkstandard, z.B. dem GSM-Standard, entsprechende SMS-Antwortnachricht umwandelt.

Von der SMS-Servereinrichtung 71 wird die SMS-Antwortnachricht über an die SMS-Sammelversandeinrichtung 70 übergeben, die sie wiederum über eine Datenleitung 8 an eine fest zugeordnete und dauerhaft bereite SMS-Sammelversandeinrichtung 32 des Mobilfunkdienstbetreibers 3 übermittelt, von wo sie dann über das Mobilfunknetz 31 an die Mobilfunkeinrichtung 2 des Nutzers übermittelt wird.

Der Nutzer erhält auf diese Weise die Mobilfunkteilnehmernummer desjenigen Funkmodems 210, 220 übermittelt, welches jeweils einer der Antwortgeneratoren 410, 420 und damit einer der virtuellen Personen, mit denen der Nutzer scheinbar in Kontakt tritt, zugeordnet ist. Beispielsweise ist einem ersten Funkmodem 210 ein erster Antwortgenerator 410 zugeordnet, die der Nutzer bei seinem Anruf bei der Buchungseinrichtung 100 ausgewählt hat.

Der Nutzer kann jetzt von seiner Mobilfunkeinrichtung 2 aus eine SMS-Nachricht mit in natürlicher Sprache abgefasstem Text versenden, die über das Mobilfunknetz 3 zum Funkmodem 210 übermittelt wird. Die SMS-Nachricht wird durch eine SMS-Servereinrichtung 211 vom Funkmodems 210 ausgelesen und in ein Datentelegramm 250 umgewandelt, dass im wesentlichen die Mobilfunkteilnehmernummer des Nutzers und den mit der SMS-Nachricht übersandten Text in alphanumerischen Zeichen enthält. Zusätzlich kann die Kennung des Funkmodems in dem Datentelegramm enthalten sein oder die Kennung des auszuwählenden Antwortgenerators für den jeweiligen Nutzer oder der Name der virtuellen Person, mit der ein bestimmter Antwortgenerator und ein bestimmtes Funkmodem verknüpft sind.

Das Datentelegramm wird von der SMS-Verteilereinrichtung 201 an die Dialogsteuerungseinrichtung 300 übergeben. Durch die Dialogsteuerungseinrichtung 300 wird der zum jeweiligen Nutzer gehörende Datensatz, der unter der Mobilfunkteilnehmernummer des zu verarbeitenden Datentelegramms gespeichert ist, aus der Teilnehmerdatenbankeinrichtung 500 abgerufen. Das Teilnehmer-Wertkonto innerhalb des Datensatzes 250 wird aktualisiert, beispielsweise wird für den Empfang einer SMS-Nachricht vom Nutzer eine Wert-Einheit abgezogen.

Sind keine weiteren oder nur noch wenige Wert-Einheiten mehr vorhanden, kann die Dialogsteuerungseinrichtung 300 dem Nutzer eine zusätzliche Mitteilung übermitteln, wo er auf den Status seines Teilnehmer-Wertkontos hingewiesen und zum Anruf bei der Buchungseinrichtung 100 aufgefordert wird, falls er sein Teilnehmer-Wertkonto wieder erhöhen möchte.

Soweit die Kennung des Funkmodems 210 und damit der zugeordnete Antwortgenerator 410 noch nicht in dem Datentelegramm enthalten ist, wird aus der Teilnehmerdatenbankeinrichtung 500 der auszuwählende Antwortgenerator 410 abgerufen und das komplette Datentelegramm an die Antwortgeneratoreinrichtung 400 übermittelt. Das Datentelegramm kann enthalten:
- die Mobilfunkteilnehmernummer des Nutzers als dessen I-dentifizierungsnummer in der Servereinrichtung 1,
- das technische Benutzerprofil, wenigstens umfassend den Typ der Mobilfunkeinrichtung 2 und den Namen des Mobilfunkdienstbetreibers;
- die Historie der bereits geführten Dialoge mit dem Nutzer einschließlich der vom Nutzer empfangenen SMS-Nachrichten und der daraufhin durch die Servereinrichtung 1 abgesandten Antworttexte,
- die Anzahl der im Teilnehmer-Wertkonto enthaltenen Werteinheiten und
- den Textbestandteil der SMS-Nachricht des Nutzers.

Zwischen der Dialogsteuerungseinrichtung 300 und der Antwortgeneratoreinrichtung 400 kann eine direkte Verbindung innerhalb einer räumlich eng umgrenzten Servereinrichtung 1 bestehen. Vorgesehen sein kann aber auch, die Antwortgeneratoren 410, 420 zusammen oder einzeln räumlich abgesetzt von den übrigen Bestandteilen des Dialogsystems anzuordnen, wie durch die strichpunktierte Linie 4 angedeutet ist, und eine Verbindung über lokale oder räumlich abgesetzte LANoder WAN-Netzwerke herzustellen.

Möglich ist ebenso, andere Einrichtungen des erfindungsgemäßen Dialogsystems in einer einzigen Hardwareeinheit zusammenzufassen oder aber in separaten Computern zu implementieren, die über an sich bekannte Datennetzwerke miteinander verbunden sind.

In dem Antwortgenerator 410 wird der Textbestandteil des Datentelegramms in an sich bekannter Weise auf seinen Bedeutungsinhalt in der Sprache untersucht und es wird aus den im Antwortgenerator 410 abgespeicherten Antworttexten ein geeigneter Antworttext ausgewählt.

Der ausgewählte Antworttext wird an die Dialogsteuerungseinrichtung 300 übergeben, die einen Identifizierungscode des ausgewählten Antworttextes oder den ausgewählten Antworttext selbst in den entsprechenden Datensatz 250 des Nutzers in der Teilnehmerdatenbankeinrichtung 500 schreibt. Außerdem wird in dem Teilnehmerkonto der Zeitpunkt des letzten Kontakts mit dem Nutzer vermerkt.

Vorzugsweise ist weiterhin vorgesehen, dass der Antwortgenerator 410 selbst anhand der im Datentelegramm enthaltenen Historie eine Überprüfung vornimmt, ob der Antworttext zuvor schon einmal an denselben Nutzer übermittelt wurde, und in diesem Fall dann selbsttätig einen anderen Antworttext auswählt.

Ist ein Antworttext ausgewählt worden, so wird das Datentelegramm an die Sende- und Empfangseinrichtung 200 übergeben, wo es in einer SMS-Verteilereinrichtung 201 an die SMS-Servereinrichtung 71 übergeben wird, die es in eine dem jeweiligen Mobilfunkstandard, z.B. dem GSM-Standard, entsprechende SMS-Antwortnachricht umwandelt.

Von der SMS-Servereinrichtung 71 wird die SMS-Antwortnachricht an die SMS-Sammelversandeinrichtung 70 übergeben, die sie wiederum über eine Datenleitung 8 an eine fest zugeordnete und dauerhaft bereite SMS-Sammelversandeinrichtung 32 des Mobilfunkdienstbetreibers 3 übermittelt, von wo sie dann über das Mobilfunknetz 31 an die Mobilfunkeinrichtung 2 des Nutzers übermittelt wird.

Der Nutzer erhält schließlich auf seine über eine SMS-Nachricht übermittelte Anfrage in natürlicher Sprache bei derjenigen virtuellen Person, die er bei seinem Anruf bei der Buchungseinrichtung 100 festgelegt hat, eine technisch erzeugte Antwort, die gleichwohl auch in natürlicher Sprache abgefasst ist. Auch anhand weiterer Merkmale, wie der mit der Antwort als Absender übermittelten Mobilfunkteilnehmernummer, hinter der sich eines der Funkmodems 210, 220 verbirgt, wird der Eindruck erweckt, es handele sich um die Antwort einer natürlichen Person. Durch die Auswahl entsprechender Antworten, die in den Antwortgeneratoren 410, 420 gespeichert sind, kann der Betreiber der Servereinrichtung 1 ein Themenfeld abdecken und auf diese Weise steuern, ob der Dialog ausschließlich zu Unterhaltungszwecken, beispielsweise als Flirt, geführt werden soll, oder ob mit dem erfindungsgemäßen Dialogsystem und dem Verfahren eine technische Information, beispielsweise zu einem bestimmten Produkt auf ein entsprechende Anfrage des Nutzers hin übermittelt werden soll.

Lässt die Anfrage des Nutzers erkennen, dass dieser nicht nur einen Antworttext erwartet, sondern weitere akustische oder visuelle Effekte, so kann aus einem Programmspeicher 610, der beispielsweise mit der Antwortspeichereinrichtung 600 verbunden ist, ein computerausführbarer Code abgerufen werden, der ebenfalls durch eine SMS-Nachricht auf die Mobilfunkeinrichtung 2 des Nutzers übermittelt wird und dort als Grafik auf dem Display erscheint oder als so genannter Klingelton zu hören ist. Es kann vorgesehen sein, dass für das Versenden von nicht-alphanumerischen Code eine erhöhte Anzahl von Wert-Einheiten vom Teilnehmer-Wertkonto des Nutzers abgebucht wird.

In regelmäßigen Abständen überprüft die Dialogsteuerungseinrichtung 300 die Teilnehmerkonten in der Teilnehmerdatenbankeinrichtung 500 darauf, ob seit der letzten Kontaktaufnahme ein bestimmter Zeitraum vergangen ist. In diesem Fall ruft die Dialogsteuerungseinrichtung 300 einen der in der Antwortspeichereinrichtung 600 enthaltenen Antworttexte ab, generiert zusammen mit der Mobilfunkteilnehmernummer des Nutzers ein Datentelegramm und übergibt dieses an die Sende- und Empfangseinrichtung 200, über die es als SMS-Nachricht an die Mobilfunkeinrichtung 2 des Nutzers übermittelt wird. Auch solche selbst von der Servereinrichtung 1 initiierten Nachrichten an den Nutzer verstärken den Eindruck bei ihm, er stehe in Kontakt mit einer natürlichen Person, die, anders als bei üblichen technischen Geräten, die meist eine Aktion des Nutzers für eine technisch bedingte Reaktion voraussetzen, von sich aus einen Kontakt herstellt.

## Patentansprüche

1. Verfahren zum automatischen Verarbeiten von SMS-Nachrichten mit Hilfe einer Servereinrichtung, die mit einem Mobilfunknetz (3) Informationen austauschen kann, mit folgenden Verfahrensschritten:
a) elektronisches Erfassen einer von einer Mobilfunkeinrichtung (2) über das Mobilfunknetz (3) gesendeten SMS-Nachricht mit Hilfe der Servereinrichtung (1),
b) elektronisches Ermitteln eines Inhalts der SMS-Nachricht,
c) Erfassen einer der Mobilfunkeinrichtung (2) zugeordneten Mobilfunkteilnehmernummer als Identifikation eines Nutzers und Speichern in einer Teilnehmerdatenbankeinrichtung (500),
d) automatisches Erzeugen einer SMS-Antwortnachricht in Abhängigkeit von dem ermittelten Inhalt der SMS-Nachricht,
e) Speichern einer Information über die SMS-Antwortnachricht in der Teilnehmerdatenbankeinrichtung (500), wobei die Information der Identifikation des Nutzers elektronisch zugeordnet ist;
f) Übermitteln der SMS-Antwortnachricht an die Mobilfunkeinrichtung,
**dadurch gekennzeichnet,**
- **dass** solche SMS-Nachrichten verarbeitet werden, die einen in natürlicher menschlicher Sprache abgefassten Nachrichtentext enthalten; und
- **dass** die SMS-Nachrichten des Nutzers über ein Funkmodem (210, 220), welchem jeweils eine Mobilfunkteilnehmernummer zugeordnet ist, empfangen werden und in ein Datentelegramm (250) umgewandelt werden, welches wenigstens die Mobilfunkteilnehmernummer des Nutzers und einen Nachrichtentext der SMS-Nachricht umfasst;
- **dass** das Datentelegramm (250) an einen dem Funkmodem (210, 220) zugeordneten Antwortgenerator (410, 420) übermittelt wird, in welchem in Abhängigkeit von in dem Nachrichtentext enthaltenen Schlüsselwörtern ein vorgefertigter Antworttext in natürlicher Sprache und/oder ein Antworttext nach semantischen Regeln generiert wird und/oder ein computerlesbarer Code ausgewählt wird
und/oder
- **dass** ohne einen Empfang einer SMS-Nachricht nach Ablauf einer Wartezeit ein Antworttext aus einer Antwortspeichereinrichtung (600) abgerufen und an den Nutzer übermittelt wird.

2. Verfahren nach Anspruch 1, **dadurch gekennzeichnet, dass** vor Schritt a) folgende Schritte durchgeführt werden:
- Entgegennehmen eines Anrufs des Nutzers an einer Buchungseinrichtung (100),
- Abfrage der Mobilfunkteilnehmernummer des Nutzers,
- Einrichten eines Teilnehmerkontos in der Teilnehmerdatenbankeinrichtung (500),
- Erhöhen eines Teilnehmer-Wertkontos in der Teilnehmerdatenbankeinrichtung (500) in Abhängigkeit von der Anrufdauer.

3. Verfahren nach Anspruch 2, **dadurch gekennzeichnet, dass** nach dem Erhöhen eines Teilnehmer-Wertkontos eine erste SMS-Antwortnachricht an die Mobilfunkeinrichtung des Nutzers übermittelt wird.

4. Verfahren nach Anspruch 2 oder 3, **dadurch gekennzeichnet, dass** zusätzlich der Typ der Mobilfunkeinrichtung (2) des Nutzers und/oder den vom Nutzer ausgewählten Antwortgenerator (410, 420) und/oder der Name des Mobilfunkdienstbetreibers des Nutzers abgefragt wird.

5. Verfahren nach einem der Ansprüche 2 bis 4, **dadurch gekennzeichnet, dass** die Abfragen über ein Spracherkennungssystem erfolgen.

6. Verfahren nach einem der Ansprüche 1 bis 5, **dadurch gekennzeichnet, dass** die SMS-Antwortnachricht über eine Datenleitung an eine SMS-Sammelversandeinrichtung (32) eines Mobilfunkdienstbetreibers und von dort an die Mobilfunkeinrichtung (2) des Nutzers übermittelt werden.

7. Verfahren nach Anspruch 6, **dadurch gekennzeichnet, dass** die SMS-Antwortnachricht als Absenderadresse die Mobilfunkteilnehmernummer desjenigen Funkmodems (410; 420) enthält, welches zum Empfang der SMS-Nachrichten des jeweiligen Nutzers bestimmt ist.

8. Verfahren nach einem der Ansprüche 1 bis 7, **dadurch gekennzeichnet, dass** der computerlesbare Code eine Audiodatei, einen Klingelton und/oder eine Grafikdatei umfasst; welche auf der Mobilfunkeinrichtung (2) des Nutzers wiederzugeben sind.

9. Dialogsystem zur Kommunikation mittels SMS-Nachrichten mit einem Nutzer, zur Verwendung bei einem Verfahren nach einem der Ansprüche 1 bis 8, wenigstens umfassend:
- eine Buchungseinrichtung (100);
- eine Sende- und Empfangseinrichtung (200) mit wenigstens:
- einem Funkmodem (210; 220) mit jeweils wenigstens einer zugeordneten SMS-Servereinrichtung (211; 221),
- wenigstens einer SMS-Sammelversandeinrichtung (70) mit jeweils wenigstens einer zugeordneten SMS-Servereinrichtung (71) zum Senden von SMS-Nachrichten über eine SMS-Sammelversandeinrichtung (32) eines Mobilfunkdienstbetreibers (3); und
- einer SMS-Verteilereinrichtung (201).
- wenigstens einen jedem Funkmodem (210; 220) zugeordneten Antwortgenerator (410; 420) in einer Antwortgeneratoreinrichtung (400),
- eine Teilnehmerdatenbankeinrichtung (500),
wobei wenigstens die vorgenannten Einrichtungen (100, 200, 400, 500) über eine Dialogsteuerungseinrichtung 300 verbunden sind.
